# EUROPÄISCHE PATENTANMELDUNG

(11) **EP 4 837 880 A1**
(43) Veröffentlichungstag der Anmeldung: **11.11.2026**
(21) Anmeldenummer: 26175703.3
(22) Anmeldetag: 30.04.2026
(51) Int. Cl.: C01B 13/11

(54) **OZONGENERATOR FÜR EINEN CHEMILUMINESZENZANALYSATOR**

(30) Priorität: 07.05.2025 DE 102025117470
(71) Anmelder: AVL Analytical Technologies GmbH, 41460 Neuss (DE)
(72) Erfinder: Kreft, Norbert, 41462 Neuss (DE)
(74) Vertreter: Stolmár & Partner Intellectual Property GmbH

(57) **Zusammenfassung**

Es sind Ozongeneratoren für Chemilumiszenzanalysatoren mit zumindest zwei Platten (10, 12,14), einem Kanal (36), der zwischen den Platten (10,14) ausgebildet ist, und von einem Einlass (41) zu einem Auslass (44) entlang seiner Länge durchströmbar ist, und in seiner Breite durch seitliche Wandflächen (38) begrenzt ist, und Elektroden (22, 30), welche an zwei gegenüberliegenden Seiten des Kanals (36) an den Platten (10, 14) angeordnet sind, bekannt.

Um die Stabilität der Ozonerzeugung zu verbessern, wird vorgeschlagen, dass die Elektroden (22, 30) außerhalb des Kanals (36) angeordnet sind und sich korrespondierend zum Kanal (36) erstrecken, wobei bei einer Projektion der Elektroden (22, 30) in Richtung eines Normalenvektors auf die Platten (10, 14), die Elektroden (22, 30) zu beiden Seiten einen Abstand (46) zu die den Kanal (36) seitlich begrenzenden Wandflächen (38) aufweisen.

## Beschreibung

Die Erfindung betrifft einen Ozongenerator für einen Chemilumineszenzanalysator mit zumindest zwei Platten, einem Kanal, der zwischen den Platten ausgebildet ist, und von einem Einlass zu einem Auslass entlang seiner Länge durchströmbar ist, und in seiner Breite durch seitliche Wandflächen begrenzt ist, und Elektroden, welche an zwei gegenüberliegenden Seiten des Kanals an den Platten angeordnet sind.

Derartige Plattenozongeneratoren arbeiten üblicherweise mit einer Wechselspannung, die zwischen zwei Elektroden anliegt, wodurch ein elektrisches Feld erzeugt wird. Zwischen den Elektroden befindet sich ein dielektrisches Material. Der mit Sauerstoff oder Luft durchströmte Kanal, der zwischen den Platten ausgebildet wird, wird durch das elektrische Feld ionisiert, wobei durch die Entladungen Sauerstoffmoleküle aufgespaltet werden und Sauerstoffradikale entstehen. Diese Radikale rekombinieren anschließend und bilden Ozon.

Das derart erzeugte Ozon wird mit dem Luftstrom weiter zum Chemilumineszenzanalysator gefördert, wo es insbesondere zur Stickoxidanalyse genutzt wird, jedoch auch beispielsweise zur Analyse von Schwefelmonoxid oder Kohlenmonoxid genutzt werden kann. Dass Ozon wird im Luftstrom mit Stickstoffmonoxid gemischt und reagiert zu angeregtem NO₂, das Licht emittiert, dessen Intensität über den Detektor gemessen werden kann, um die Mengen zu bestimmen.

Diese Plattenozongeneratoren bestehen üblicherweise aus zwei oder mehreren Platten, die aufeinander gestapelt werden und zwischen denen ein Raum zur Umwandlung des Sauerstoffs gebildet wird, wobei über einen Einlass Luft oder Sauerstoff zugeführt wird, der den Kanal nach der Erzeugung des Ozons über einen Auslass wieder verlässt. Die Platten sind aus einem Dielektrikum. Über Elektroden, die den Raum begrenzen oder außerhalb des Raums ausgebildet sind, wird das notwendige elektrische Feld erzeugt.

So wird in der US 2004/0136885 A1 ein Ozongenerator beschrieben, der zwei dielektrische Platten aufweist, die zueinander gewandte im Querschnitt halbkreisförmige Ausnehmungen aufweisen, so dass durch Stapeln der beiden Platten kreisförmige Kanäle gebildet werden. Die verwendeten Elektroden weisen eine Stabform auf, wobei eine Elektrode an der ersten Platte innerhalb der Nut angeordnet ist und eine zweite Elektrode an der Außenseite der anderen Platte ausgebildet ist. Die parallel verlaufenden Kanäle werden über Endplatten, in denen entsprechende Ausnehmungen ausgebildet sind, miteinander verbunden.

Es hat sich jedoch gezeigt, dass bei diesem Plattenozongenerator, ebenso wie bei anderen bekannten Ozongeneratoren bei der Verwendung von Luft zur Ozonerzeugung keine ausreichend stabile Ozonproduktion sichergestellt werden kann, um die Stickoxidmengen bei geringen Stickoxidanteilen im Luftstrom ausreichend genau bestimmen zu können. Zusätzlich wird auch nicht sichergestellt, dass eine entsprechend zeitlich stabile Bildung von Stickoxiden zur Analyse erfolgt.

Es stellt sich daher die Aufgabe, einen Ozongenerator zur Verfügung zu stellen, mit dem auch bei der Erzeugung von Ozon aus Umgebungsluft geringe Nachweisgrenzen am Chemilumineszenzanalysator erreicht werden können, indem eine stabile Ozon- und Stickoxiderzeugung sichergestellt wird.

Diese Aufgabe wird durch einen Ozongenerator für einen Chemilumineszenzanalysator mit den Merkmalen des Hauptanspruchs 1 gelöst.

Der erfindungsgemäße Ozongenerator für einen Chemilumiszenzanalysator weist zumindest zwei Platten auf, zwischen denen ein Kanal ausgebildet ist, welcher insbesondere von Luft durchströmt wird, deren Sauerstoff teilweise in Ozon umgewandelt werden soll. Die Strömung der Luft erfolgt von einem Einlass zu einem Auslass entlang der Länge des Kanals. In seiner Breite wird der Kanal durch seitliche Wandflächen begrenzt, wobei die Breite jeweils senkrecht zur Durchströmungsrichtung beziehungsweise Länge des Kanals und parallel zur Haupterstreckungsebene der Platten verläuft, während unter einer Höhe des Kanals die Richtung senkrecht zur Breite und zur Länge zu verstehen ist. Des Weiteren weist der Ozongenerator Elektroden auf, welche an zwei gegenüberliegenden Seiten des Kanals an den Platten angeordnet sind, um ein elektrisches Feld zu erzeugen und den Kanal entsprechend zu ionisieren, so dass die Sauerstoffmoleküle in geladene Ionen und freie Elektronen umgewandelt werden. Erfindungsgemäß sind die Elektroden außerhalb des Kanals angeordnet und erstrecken sich korrespondierend zum Kanal. Dies bedeutet, dass die Elektroden bezüglich ihrer Erstreckung der Erstreckungsrichtung des Kanals folgen. Dabei weisen bei einer Projektion der Elektroden in Richtung eines Normalenvektors auf die Platten, die Elektroden zu beiden Seiten einen Abstand zu die den Kanal seitlich begrenzenden Wandflächen auf. Die Elektroden weisen entsprechend eine geringere Breite auf als der Kanal und enden vor dem Auslass und beginnen hinter dem Einlass. Dadurch wird das elektrische Feld an der Grenzschicht zwischen der Strömung und dem strömungsführenden Material, also an den seitlichen Wandflächen nicht wirksam, wodurch an den Wandflächen keine Inhomogenitäten aus den unterschiedlichen elektrischen Eigenschaften des Gases und des strömungsführenden Materials entstehen, da Zonen mit hohen und inhomogenen Feldern in der Gasströmung vermieden werden, die andernfalls an den Konturen und an Ein- und Auslass des Betriebsgases entstehen können. In solchen inhomogenen Feldern werden in Zonen mit hohen Feldstärken vermehrt Stickoxide produziert, wodurch die Messwerte inkonstant und nicht mehr reproduzierbar würden. Durch die besondere Anordnung wird es entsprechend möglich, eine stabile Ozon- und Stickoxiderzeugung sicherzustellen, wodurch deutlich geringere Nachweisgrenzen und genauere Messwerte erzielt werden. Des Weiteren wird durch die Vermeidung der Inhomogenitäten die Gefahr lokaler elektrischer Durchschläge verringert, die die Lebensdauer des Ozongenerators verkürzen würden.

Vorzugsweise erstrecken sich der Kanal und die Elektroden mäanderförmig. Mäanderförmig bedeutet, dass der Kanal zwischen den Platten wechselnde Richtungen aufweist, insbesondere jeweils 180°-Bögen an den Plattenenden ausgebildet sind, von wo aus sich der Kanal in Richtung des entgegengesetzten Plattenendes gerade bis zum nächsten 180° Boden erstreckt. Durch diese Form wird eine gleichmäßige geführte Strömung mit einem entsprechend gleichmäßig langen Aufenthalt der Luft beziehungsweise des Sauerstoffs im Kanal auf engem Raum sichergestellt, wodurch die Stabilität der Ozonerzeugung erhöht wird.

Besonders bevorzugt ist es, wenn der Ozongenerator eine erste Platte und eine dritte Platte aufweist, zwischen denen eine zweite Platte angeordnet ist, die eine den Kanal bildende Durchgangsöffnung aufweist und welche die den Kanal in seiner Breite begrenzenden Wandflächen ausbildet, wobei die erste Platte den Kanal an einer von der dritten Platte abgewandten Seite begrenzt und die dritte Platte den Kanal an der von der ersten Platte abgewandten Seite der mittleren Platte begrenzt. Dies vereinfacht die Herstellung und insbesondere die Herstellung sehr flacher Kanalstrukturen.

In einer weiterführenden Ausführungsform ist an der ersten Platte eine erste Öffnung ausgebildet, die den Einlass bildet und eine zweite Öffnung ausgebildet, die den Auslass bildet. Hierzu reichen einfach ausführbare axiale Bohrungen durch die erste Platte aus, wodurch die Herstellung und Montage erleichtert wird.

Vorzugsweise sind die Elektroden auf nach außen weisenden Oberflächen der ersten und dritten Platte ausgebildet. Dies vereinfacht die Ausbildung der Elektroden und ermöglicht die Ausbildung sehr gleichmäßiger elektrischer Felder im Innern des Kanals.

In einer alternativen Ausführungsform weist der Ozongenerator zwei übereinander angeordnete Platten auf, wobei beide Platten korrespondierende Nuten aufweisen, die den Kanal ausbilden, wobei die Elektroden jeweils auf der von den Nuten abgewandten Oberflächen der Platten ausgebildet sind. Bei dieser Ausführung kann somit auf eine Platte verzichtet werden, wodurch auch die Anzahl gegebenenfalls notwendiger Dichtungen verringert werden kann.

Des Weiteren ist es vorteilhaft, wenn der Kanal einen im Wesentlichen rechteckigen Querschnitt aufweist, wobei die Breite des Kanals mindestens dem Fünffachen der Höhe des Kanals entspricht. Durch den schmalen Spalt ist die elektrische Feldstärke bei gleicher Spannung höher, so dass die Effizienz der Koronaentladung gesteigert wird und somit mehr Ozon erzeugt wird. Zusätzlich verbessert dies eine aufgrund der exothermen Reaktion gegebenenfalls notwendige Wärmeabfuhr. Auch wird eine gleichmäßige Luftströmung mit einer guten Durchmischung erreicht, wodurch die Ozonproduktion effektiver und stabiler wird.

In einer weiteren vorteilhaften Ausführung entspricht die Breite der Elektroden 80%-95% der Breite des Kanals. In diesem Bereich werden Grenzschichten innerhalb des elektrischen Feldes, welche zu einer erhöhten Stickoxidproduktion und Inhomogenitäten der Strömung innerhalb des elektrischen Feldes vermieden und somit eine besonders stabile Ozonproduktion erzielt.

Besonders vorteilhaft ist es auch, wenn die Elektroden als Dünnschicht-Elektroden ausgebildet sind. Diese ermöglichen die Erzeugung eines sehr homogenen Feldes im Kanal bei hoher elektrischer Feldstärke, was zu einer Verbesserung der Koronaentladung und somit zu erhöhter Effizienz führt, da auch der Energieverbrauch gering ist. Ein weiterer Vorteil ist die relativ geringe Wärmekapazität.

In einer weiterführenden Ausführungsform sind die Dünnschicht-Elektroden als Folien, Sputterschichten, Lackschichten ausgebildet oder durch chemische Gasphasenabscheidung hergestellt. Diese Aufbringungsformen ermöglichen eine hochpräzise Herstellung der Elektroden.

Vorzugsweise weisen die Elektroden eine geringere Länge als der Kanal auf und einen Abstand zum Einlass und zum Auslass auf, der geringer ist als die Breite des Kanals und größer ist als der Abstand zu den seitlichen begrenzenden Wandflächen des Kanals. Hierdurch wird zunächst eine Gleichmäßigkeit der Strömung nach dem Einströmen in den Kanal sowie vor dem Ausströmen des Kanals erreicht, so dass Turbulenzen nicht zu einer Instabilität der Ozonerzeugung führen. Des Weiteren wird ein Abstand zu den das Ende und den Anfang der den Kanal begrenzenden Wände sichergestellt, wodurch auch an diesen Wandflächen keine Inhomogenitäten aus den unterschiedlichen elektrischen Eigenschaften des Gases und des strömungsführenden Materials entstehen, da Zonen mit hohen und inhomogenen Feldern in der Gasströmung vermieden werden.

Vorzugsweise sind die Platten aus einem Aluminiumoxid hergestellt. Aluminiumoxid weist eine hohe dielektrische Festigkeit auf, wodurch es starke elektrische Felder erlaubt und Durchschläge reduziert werden. Des Weiteren weist es eine gute Wärmeleitfähigkeit auf, so dass die entstehende thermische Energie besser abgeführt werden kann. Des Weiteren ist Aluminiumoxid ozon- und korrosionsbeständig, wodurch die Lebensdauer des Ozongenerators erhöht wird. Auch lassen sich diese Platten hochgenau und mit sehr glatten Oberflächen herstellen, wodurch weniger starke Grenzschichten gebildet werden und auf Dichtungen zwischen den Platten verzichtet werden kann.

In einer weiteren Ausbildung der Erfindung weisen die Platten korrespondierende Durchgangslöcher außerhalb des Kanals auf, durch die Schrauben ragen, über die die Platten miteinander verschraubt sind. So kann ein dichter Kanal geschaffen werden. Des Weiteren ist die Montage sehr einfach.

Es wird somit ein Ozongenerator für einen Chemilumiszenzanalysator geschaffen, der eine sehr große Stabilität in der Ozon- und Stickoxidproduktion aufweist, wodurch auch sehr geringe Nachweisgrenzen des Chemilumiszenzanalysators erzielt werden können und dessen Messwerte hochgenau sind. Auf diese Weise kann Luft als Gas zur Erzeugung des Ozons genutzt werden. Des Weiteren ist der Ozongenerator einfach und kostengünstig herzustellen und zu montieren und weist eine lange Lebensdauer auf.

Ein nicht beschränkendes Ausführungsbeispiel eines erfindungsgemäßen Ozongenerators ist in den Figuren dargestellt und wird nachfolgend beschrieben.

Figur 1 zeigt eine Draufsicht auf den Ozongenerator, wobei ein innenliegender Kanal mit gestrichelten Linien dargestellt ist.

Figur 2 zeigt eine Seitenansicht des Ozongenerators aus der Figur 1 in geschnittener Darstellung.

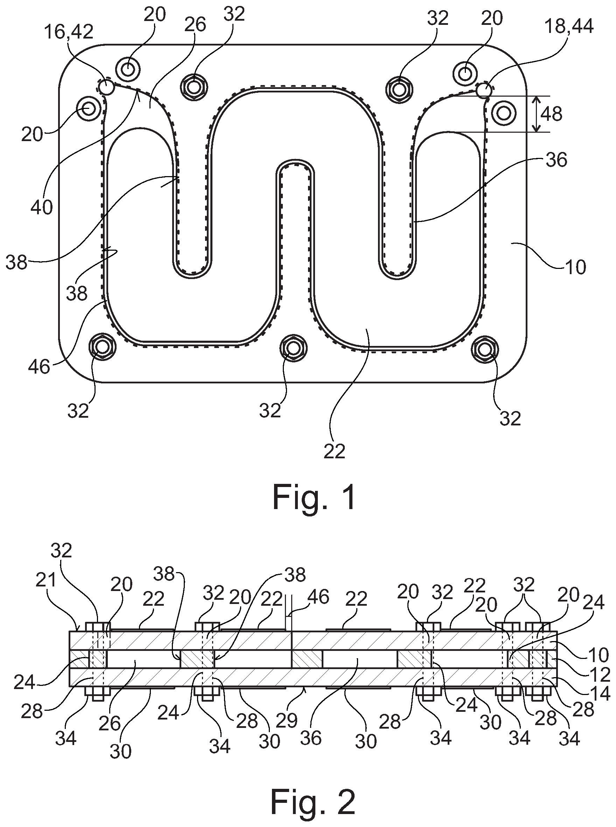

Der in den Figuren 1 und 2 dargestellte, erfindungsgemäße Ozongenerator besteht aus insgesamt drei Platten 10, 12, 14. Die erste Platte 10 ist als rechteckige flache Platte ausgebildet, in der eine erste Öffnung 16 und eine zweite Öffnung 18 ausgebildet sind. Des Weiteren weist die erste Platte mehrere Durchgangslöcher 20 auf. Auf einer von der zweiten Platte 12 abgewandten Seite der ersten Platte 10 ist auf einer Oberfläche 21 der Platte 10 eine erste Elektrode 22 ausgebildet, die als Dünnschichtelektrode ausgeführt ist und durch eine Folie, eine Sputterschicht, eine Lackschicht oder durch chemische Gasphasenabscheidung hergestellt ist und fest mit der ersten Platte verbunden ist.

Die zweite, mittlere Platte 12 ist ebenfalls als flache rechteckige Platte ausgeführt und weist die gleichen Abmessungen auf, wie die erste Platte 10. Diese zweite Platte 12 weist auch zu den Durchgangslöchern 20 korrespondierende Durchgangslöcher 24 auf, so dass die Durchgangslöcher 20 im aufeinandergestapelten Zustand der beiden Platten 10, 12 durch die Durchgangslöcher 24 verlängert werden. Im Innern weist die zweite Platte eine Durchgangsöffnung 26 auf, welche sich mäanderförmig entlang der Länge und Breite der Platte 12 erstreckt. Diese Durchgangsöffnung 26 läuft entsprechend zunächst parallel zu einer Seite der Platte 12 bis sie vor Erreichen des Endes der Platte 12 einen 180° Bogen beschreibt und sich zur entgegengesetzten Seite erstreckt, wo sie erneut einen 180° Bogen beschreibt und sich weiter parallel zum ersten und zweiten Abschnitt erstreckt. So können je nach Plattengröße eine beliebige Anzahl an Bögen und geraden Erstreckungen ausgeführt werden.

Die dritte Platte 14 ist im Wesentlichen als geschlossene Platte ausgebildet, außer dass auch in dieser Platte 14 korrespondierende Durchganglöcher 28 ausgebildet sind, durch die die Durchgangslöcher 20, 24 der ersten und zweiten Platte 10, 12 verlängert werden. Auch weist die dritte Platte 14 erneut die gleichen Abmessungen auf, wie die erste und zweite Platte 10,12. Auf einer von der zweiten Platte 12 abgewandten Oberfläche 29 der dritten Platte 14 ist eine zweite Elektrode 30 in Dünnschichttechnik ausgebildet.

Die drei Platten 10, 12, 14, die beispielsweise aus Aluminiumoxid hergestellt sind, werden über Schrauben 32, welche durch die Durchgangslöcher gesteckt werden, und Muttern 34 miteinander verbunden. Hierdurch wird ein Kanal 36 gebildet, der in seiner Höhe durch die erste und dritte Platte 10, 14 begrenzt wird und in seiner Breite durch zur Durchgangsöffnung 26 gewandte, seitlich begrenzende Wandflächen 38 und in seiner Länge durch am Anfang und am Ende des ausgebildeten Kanals 36 angeordnete begrenzende Wandflächen 40 der zweiten Platte 12 begrenzt wird. Der Kanal ist flach ausgebildet und weist ein Höhen-Breiten-Verhältnis von etwa 1:10 auf. Die erste Öffnung 16 mündet im Bereich einer der beiden den Kanal 36 in seiner Länge begrenzenden Wandflächen 40 in den Kanal 36 und bildet einen Einlass 42 des Ozongenerators. Die zweite Öffnung 18 mündet im Bereich der anderen den Kanal 36 in seiner Länge begrenzenden Wandflächen 40 in den Kanal 36 und bildet einen Auslass 44 des Ozongenerators.

Die Elektroden 22, 30 weisen eine zu dem Kanal 36 korrespondierende Form auf, erstrecken sich also entlang des Kanals 36 mäanderförmig auf den Oberflächen 21, 29 der ersten und dritten Platte 10, 14. Bezüglich einer Projektion in Richtung eines Normalenvektors auf die nach außen weisenden Oberflächen 21, 29 der ersten und der dritten Platte 10, 14 weisen die Elektroden 22, 30 jedoch einen Abstand 46 zu den den Kanal 36 seitlich begrenzenden Wandflächen 38 auf. Dieser Abstand entspricht zu beiden Seiten etwa 5% der Breite des Kanals 36, so dass die Breite der Elektroden etwa 90% der Breite des Kanals 36 entsprechen. Der seitliche Abstand der Elektroden 22, 30 zu den seitlich begrenzenden Wandflächen 38 ist bezüglich der Breite des Kanals 36 zu beiden Seiten gleich groß. Auch weisen die Elektroden 22, 30 einen Abstand 48 zu den den Kanal 36 in seiner Länge begrenzenden Wandflächen 40 sowie zum Einlass 42 und zum Auslass 44 auf. Dieser Abstand beträgt etwa 50% der Breite des Kanals 36, so dass zunächst eine Strömungsberuhigung stattfinden kann.

Wird nun ein Luftstrom über den Einlass 42 in den Kanal 36 gesaugt, und eine hochfrequente Spannung an die Elektroden 22, 30 angelegt, entsteht ein starkes elektrisches Feld, durch welches die Elektronen beschleunigt werden und mit Sauerstoffmolekülen kollidieren. Dabei werden die Moleküle gespalten und ionisiert. Da die entstehenden freien Sauerstoffatome hochreaktiv sind regieren sie mit vorhandenen Sauerstoffmolekülen zu Ozon, so dass der aus dem Kanal 36 austretende Luftstrom Ozonmoleküle enthält, was zum Nachweis von Stickoxiden in einem Chemilumiszenzanalysator erforderlich ist. Da die Menge des zum Analysators Ozons dessen Messergebnisse beeinflusst, ist es notwendig, dass der zugeführte Ozonstrom möglichst stabil ist, um geringe Nachweisgrenzen und hohe Genauigkeiten erreichen zu können. Durch die beschriebene Anpassung der Elektroden 22, 30 an den Kanal 36 wird verhindert, dass Zonen mit inhomogenen Feldern entstehen, welche vor allem im Bereich der Grenzschichten einer Strömung und somit an den Wandflächen 38, 40 des Kanals 36 aufgrund der unterschiedlichen elektrischen Eigenschaften der Strömung und des begrenzenden Materials entstehen könnten. Durch den Abstand der Elektroden 22, 30 zu diesen Wandflächen 38, 40 wird das elektrische Feld in diesem Bereich nicht wirksam, so dass dort keine Ionisation erfolgt. Der Luftstrom wird somit immer entlang des homogenen elektrischen Feldes oder außerhalb des elektrischen Feldes geführt, wodurch die Gefahr von elektrischen Durchschlägen reduziert wird und sowohl eine gleichmäßige Bildung von Ozon als auch eine gleichmäßige Bildung von Stickoxiden sichergestellt wird.

Es sollte deutlich sein, dass der Ozongenerator beispielsweise auch mit lediglich zwei Platten hergestellt werden kann, in denen innen zueinander gewandte Nuten ausgebildet sind und die außen die Elektroden entsprechend der ersten und dritten Platte des beschriebenen Ausführungsbeispiels aufweisen. Auch kann die Form des Kanals und der Elektroden im Vergleich zum Ausführungsbeispiel sowie die Materialien und Größen angepasst werden.

## Patentansprüche

1. Ozongenerator für einen Chemilumiszenzanalysator mit
zumindest zwei Platten (10, 12,14)
einem Kanal (36), der zwischen den Platten (10,14) ausgebildet ist, und von einem Einlass (41) zu einem Auslass (44) entlang seiner Länge durchströmbar ist, und in seiner Breite durch seitliche Wandflächen (38) begrenzt ist,
Elektroden (22, 30), welche an zwei gegenüberliegenden Seiten des Kanals (36) an den Platten (10, 14) angeordnet sind,
**dadurch gekennzeichnet, dass**
die Elektroden (22, 30) außerhalb des Kanals (36) angeordnet sind und sich korrespondierend zum Kanal (36) erstrecken, wobei bei einer Projektion der Elektroden (22, 30) in Richtung eines Normalenvektors auf die Platten (10, 14), die Elektroden (22, 30) zu beiden Seiten einen Abstand (46) zu die den Kanal (36) seitlich begrenzenden Wandflächen (38) aufweisen.

2. Ozongenerator für einen Chemilumiszenzanalysator nach Anspruch 1,
**dadurch gekennzeichnet, dass**
sich der Kanal (36) und die Elektroden (22, 30) mäanderförmig erstrecken.

3. Ozongenerator für einen Chemilumiszenzanalysator nach Anspruch 1 oder 2,
**dadurch gekennzeichnet, dass**
der Ozongenerator eine erste Platte (10) und eine dritte Platte (14) aufweist, zwischen denen eine zweite Platte (12) angeordnet ist, die eine den Kanal (36) bildende Durchgangsöffnung (26) aufweist und welche die den Kanal (36) in seiner Breite begrenzenden Wandflächen (38) ausbildet, wobei die erste Platte (10) den Kanal (36) an einer von der dritten Platte (14) abgewandten Seite begrenzt und die dritte Platte (14) den Kanal (36) an der von der ersten Platte (10) abgewandten Seite der mittleren Platte (12) begrenzt.

4. Ozongenerator für einen Chemilumiszenzanalysator nach Anspruch 3,
**dadurch gekennzeichnet, dass**
an der ersten Platte (10) eine erste Öffnung (16) ausgebildet ist, die den Einlass (42) bildet und eine zweite Öffnung (18) ausgebildet ist, die den Auslass (44) bildet.

5. Ozongenerator für einen Chemilumiszenzanalysator nach Anspruch 3 oder 4,
**dadurch gekennzeichnet, dass**
die Elektroden (22, 30) auf nach außen weisenden Oberflächen (21, 29) der ersten und dritten Platte (10, 14) ausgebildet sind.

6. Ozongenerator für einen Chemilumiszenzanalysator nach Anspruch 1 oder 2,
**dadurch gekennzeichnet, dass**
der Ozongenerator zwei übereinander angeordnete Platten (10, 14) aufweist, wobei beide Platten korrespondierende Nuten aufweisen, die den Kanal (36) ausbilden, wobei die Elektroden (22, 30) jeweils auf der von den Nuten abgewandten Oberflächen (21, 29) der Platten (10, 14) ausgebildet sind.

7. Ozongenerator für einen Chemilumiszenzanalysator nach einem der vorhergehenden Ansprüche,
**dadurch gekennzeichnet, dass**
der Kanal (36) einen im Wesentlichen rechteckigen Querschnitt aufweist, wobei die Breite des Kanals (36) mindestens dem Fünffachen der Höhe des Kanals (36) entspricht.

8. Ozongenerator für einen Chemilumiszenzanalysator nach einem der vorhergehenden Ansprüche,
**dadurch gekennzeichnet, dass**
die Breite der Elektroden (22, 30) 80% bis 95% der Breite des Kanals (36) entspricht.

9. Ozongenerator für einen Chemilumiszenzanalysator nach einem der vorhergehenden Ansprüche,
**dadurch gekennzeichnet, dass**
die Elektroden (22, 30) als Dünnschicht-Elektroden ausgebildet sind.

10. Ozongenerator für einen Chemilumiszenzanalysator nach Anspruch 9,
**dadurch gekennzeichnet, dass**
die Dünnschicht-Elektroden (22, 30) als Folien, Sputterschichten, Lackschichten ausgebildet oder durch chemische Gasphasenabscheidung hergestellt sind.

11. Ozongenerator für einen Chemilumiszenzanalysator nach einem der vorhergehenden Ansprüche,
**dadurch gekennzeichnet, dass**
die Elektroden (22, 30) eine geringere Länge als der Kanal (36) aufweisen und bezüglich der Projektion auf die Oberflächen (21, 29) einen Abstand (48) zum Einlass (42) und zum Auslass (44) aufweisen, der geringer ist als die Breite des Kanals (36) und größer ist als der Abstand (46) zu den seitlichen begrenzenden Wandflächen (38) des Kanals (36).

12. Ozongenerator für einen Chemilumiszenzanalysator nach einem der vorhergehenden Ansprüche,
**dadurch gekennzeichnet, dass**
die Platten (10, 12, 14) aus einem Aluminiumoxid hergestellt sind.

13. Ozongenerator für einen Chemilumiszenzanalysator nach einem der vorhergehenden Ansprüche,
**dadurch gekennzeichnet, dass**
die Platten (10, 12, 14) korrespondierende Durchgangslöcher (20, 24, 28) außerhalb des Kanals (36) aufweisen, durch die Schrauben (32) ragen, über die die Platten (10, 12, 14) miteinander verschraubt sind.
